# EUROPEAN PATENT APPLICATION

(11) **EP 2 133 666 A1**
(43) Date of publication of application: **16.12.2009**
(21) Application number: 08104321.8
(22) Date of filing: 09.06.2008
(51) Int. Cl.: G01F 1/075, G01F 1/115, G01F 3/22

(54) **Diaphragm flow meter with rotating magnets**

(71) Applicant: George Wilson Industries Limited, Aldermans Green Industrial Estate Aldermans Green, Coventry Warwickshire CV2 2LD (GB)
(72) Inventor: Wurtzler, David, Coventry, Warwickshire CV2 2LD (GB)
(74) Representative: Molony, Anna

(57) **Abstract**

A diaphragm gas meter 10 comprising two fluid paths through front and rear diaphragm pans. Reciprocating movement of the diaphragms is converted into rotational movement of a drive shaft. Four permanent magnets, 14, 16 are provided in a mounting drum 24, coupled to the drive shaft and mounted for rotation about a sensor drum 32 formed in the meter case 20. A Hall effect probe 12 is provided adjacent the internal wall of the sensor drum 32. As gas flows through the meter 10, the magnets 14, 16 rotate about the sensor drum 32, exposing the Hall effect probe 12 to a changing magnetic field. The Hall probe 12 generates a Hall voltage, which changes sign according to the polarity of the magnetic field. The changing Hall voltage is detected by an electronic index circuit (34).

## Description

The invention relates to a fluid meter, and in particular, but not exclusively, to a gas meter.

There are several known types of gas meter, which convert volumes of gas flow into movement of a mechanical counter. Such meters require the customer or a meter reader to physically inspect the meter to read the counter. It is desirable to be able to accurately and remotely read a gas meter, to thereby reduce the costs involved with meter reading and to provide accurate billing to customers.

According to an aspect of the invention there is provided a fluid meter comprising:
a fluid flow path;
a fluid engagement member provided in the fluid flow path and adapted to be driven by a fluid flow;
a magnetic field sensor;
a plurality of magnets including at least one north-pole and one south-pole mounted for rotational movement about the sensor; and
drive transfer means coupled between the fluid engagement member and the magnets, such that fluid flow is converted into rotation of the magnets about the sensor, such that the sensor detects corresponding changes in the sense of the magnetic field to which it is exposed.

The magnetic field sensor preferably comprises a Hall effect sensor, which most preferably comprises a Hall effect probe having its output connected to a signal conditioning circuit. The Hall effect sensor thereby produces a high or low logic level output signal dependent upon the polarity of the magnetic field passing through the Hall effect probe. The magnetic field sensor is preferably offset from the axis of rotation of the magnets. The magnetic field sensor is thereby exposed to the magnetic field of the magnet passing closest to it. The output signal of the Hall effect sensor is preferably coupled to an electronic index means, most preferably an electronic counter integrated circuit device. The electronic index means converts the varying high/low output voltage from the Hall effect sensor into a digital count which may then be converted into an equivalent fluid volume.

Preferably, the fluid meter further comprises a meter casing, the fluid flow path, fluid engagement member, magnets and drive transfer means being provided within the meter casing and the magnetic field sensor being provided outside the meter casing. The meter casing preferably comprises a sensor barrel projecting into the meter casing and defining a sensor socket, the magnetic field sensor being provided within the sensor socket and the magnets being mounted for rotational movement about the sensor barrel. The axis of rotation of the magnets is preferably generally co-axial with the longitudinal axis of the sensor barrel. The magnetic field sensor is preferably located adjacent to the wall of the sensor barrel, being the internal wall of the sensor socket.

Preferably, the fluid meter comprises four permanent magnets general equally spaced about a common axis of rotation. The magnets are preferably provided on a mounting drum, the drum being mounted for rotation around the sensor barrel. The magnets are preferably arranged in a north-pole, south-pole, north-pole, south-pole configuration around the drum.

The drive transfer means preferably comprises a drive shaft, coupled at one end to the mounting drum. The fluid engagement member preferably comprises a diaphragm, an impeller or a turbine.

A plurality of fluid flow paths may be provided, with a corresponding plurality of fluid engagement members located therein.

Where the or each fluid engagement member comprises a diaphragm, the drive transfer means preferably further comprises drive conversion means coupled to the diaphragm and adapted to convert reciprocating linear movement of the diaphragm into rotational movement.

The fluid is preferably natural gas.

An embodiment of the invention will now be described in detail, by way of example only, with reference to the accompanying drawings, in which:

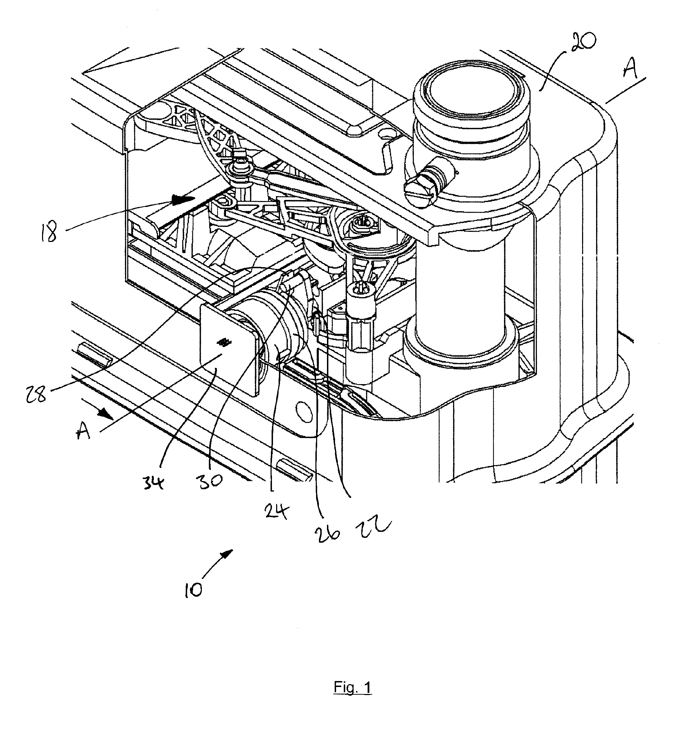

Figure 1 is a diagrammatic part cut-away representation of a diaphragm gas meter according to an embodiment of the invention; and

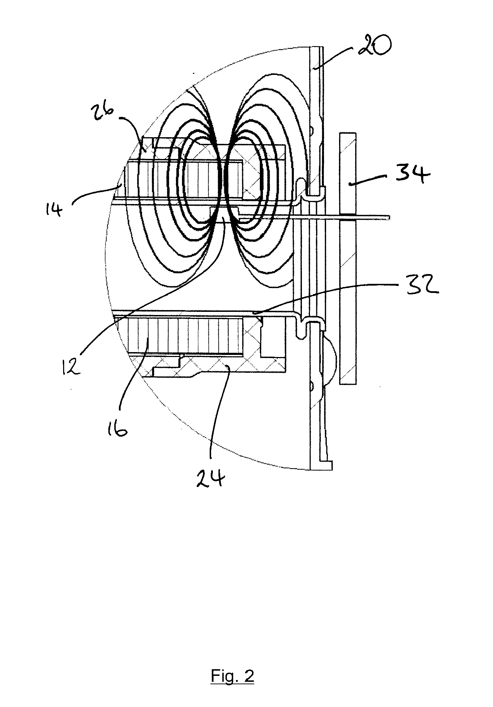

Figure 2 is a diagrammatic part-sectional view along line A-A of Figure 1.

Referring to the drawings, an embodiment of the invention provides a gas meter 10 comprising two fluid paths, a Hall effect probe 12, four permanent magnets, 14, 16 (only two are shown) and drive transfer means 18.

The gas meter 10 is a diaphragm gas meter, having two gas flow paths through front and rear diaphragm pans. The first and second fluid engagement members comprise the diaphragms provided within the front and rear diaphragm pans. The arrangement of the diaphragm pans, diaphragms, and gas inlet and outlet valves is the same as in conventional diaphragm gas meters, which will be well known to the person skilled in the art and so will not be described in detail here.

The drive transfer means 18 comprises a conventional arrangement of flags coupled to the diaphragms, flag rods and arms, and coupling cranks and gears adapted to convert the reciprocating movement of the diaphragm into rotation of the drive shaft 20. The arrangement of flags, flag rods and arms, and cranks and gears is the same as in a conventional diaphragm gas meter and so will be well known to the person skilled in the art.

The gas flow paths, diaphragm pans, diaphragms and drive transfer means 18 are provided inside the meter's mild steel case 20. As will be well known to the person skilled in the art, the reciprocating movement of the diaphragms within the diaphragm pans is converted and transferred by the drive transfer means 18 into rotation of a drive shaft 22, which completes one full revolution for each cyclic volume (dependent on meter size) of gas that passes through the meter 10.

The magnets 14, 16 are mounted within a mounting drum 24, which is mounted at one end in a mounting cup 26. A coupling tab 28 is provided on the external surface of the mounting cup 26. The magnets 14, 16 are provided in an alternating north-pole, south-pole, north-pole, south-pole arrangement around the central axis of the mounting drum 24.

The axis of the drive shaft 22 is aligned with the axis of the mounting drum 24, and thus the axis of rotation of the magnets 14, 16. The drive shaft 22 is provided with a coupling arm 30 at its distal end which is adapted to engage with and drive the coupling tab 28 on the mounting cup 26. Rotation of the drive shaft 22 is thereby coupled and transferred into rotation of the mounting cup 26 and the magnets 14, 16.

The meter case 20 is provided with a stainless steel sensor barrel 32 which is riveted into the mild steel case 20, and projects internally into the case 20. The mounting drum 24 is located on the sensor barrel 32, such that it closely fits on the sensor barrel 32 but is free to rotate about the sensor barrel. The sensor barrel 32 acts to couple the magnetic fields of the magnets 14, 16 to the outside of the meter case 20.

The Hall effect probe 12 is mounted inside the stainless steel barrel 32, adjacent the barrel wall. The Hall effect probe 12 is thereby located within the magnetic field between subsequent pairs of north and south poles of the magnets 14, 16, as the magnets 14, 16 rotate about the sensor barrel 32. The Hall effect probe 12 is therefore exposed to a changing magnetic field, the polarity of the magnetic field to which the Hall effect probe is exposed alternating as the magnets 14, 16 rotate about the sensor barrel 32; the Hall effect probe alternatingly being located between a north pole and a south pole, then a south pole and a north pole, and so on. The sign of the output Hall voltage generated by the Hall effect probe correspondingly changes, from positive to negative. The output of the Hall effect probe is interfaced to a power source and conditioning circuit 34, to together form a Hall effect sensor, which converts the output Hall voltage signal into a high or low logic level electrical output signal, dependent upon the polarity of the magnetic field passing through it. The Hall effect sensor therefore outputs an alternating high-low signal is that corresponds with the cyclic movement of the magnets 14, 16.

The high/low logic level output signal from the Hall effect sensor is coupled to an electronic index, which is preferably an electronic counter IC chip. The electronic index counts the number of high and low output signals and is operable to convert the count into the equivalent volume of gas that has passed through the meter 10. The meter 10 thereby provides a digital gas data usage measurement. The meter 10 may additionally be provided with signal transmission means, of the type provided on remotely readable electricity meters for example, such that the meter may be interrogated and the gas usage data read remotely.

## Claims

1. A fluid meter (10) comprising:
a fluid flow path;
a fluid engagement member provided in the fluid flow path and adapted to be driven by a fluid flow;
a magnetic field sensor (12);
a plurality of magnets (14, 16) including at least one north-pole and one south-pole mounted for rotational movement about the sensor; and
drive transfer means(18) coupled between the fluid engagement member and
the magnets, such that fluid flow is converted into rotation of the magnets about the sensor, such that the sensor detects corresponding changes in the sense of the magnetic field to which it is exposed.

2. A fluid meter as claimed in claim 1, wherein the magnetic field sensor comprises a Hall effect sensor (12).

3. A fluid meter as claimed in claim 2, wherein the output signal of the Hall effect sensor is coupled to an electronic index means.

4. A fluid meter as claimed in any preceding claim, wherein the fluid meter further comprises a meter casing (20), the fluid flow path, fluid engagement member, magnets and drive transfer means being provided within the meter casing and the magnetic field sensor being provided outside the meter casing.

5. A fluid meter as claimed in claim 4, wherein the meter casing comprises a sensor barrel (32) projecting into the meter casing and defining a sensor socket, the magnetic field sensor being provided within the sensor socket and the magnets being mounted for rotational movement about the sensor barrel.

6. A fluid meter as claimed in claim 5, wherein the axis of rotation of the magnets is generally co-axial with the longitudinal axis of the sensor barrel and the magnetic field sensor is located adjacent to the wall of the sensor barrel.

7. A fluid meter as claimed in claim 6, wherein the fluid meter comprises four permanent magnets general equally spaced about a common axis of rotation.

8. A fluid meter as claimed in claim 7, wherein the magnets are provided on a mounting drum (24) arranged in a north-pole, south-pole, north-pole, south-pole configuration around the drum, the drum being mounted for rotation around the sensor barrel.

9. A fluid meter as claimed in claim 8, wherein the drive transfer means comprises a drive shaft (22), coupled at one end to the mounting drum (24).

10. A fluid meter as claimed in any preceding claim, wherein the fluid engagement member comprises a diaphragm, an impeller or a turbine.

11. A fluid meter as claimed in any preceding claim, wherein a plurality of fluid flow paths are provided, with a corresponding plurality of fluid engagement members located therein.

12. A fluid meter as claimed in claims 11 or 12, wherein where the or each fluid engagement member comprises a diaphragm, the drive transfer means further comprises drive conversion means coupled to the diaphragm and adapted to convert reciprocating linear movement of the diaphragm into rotational movement.

13. A fluid meter as claimed in any preceding claim, wherein the fluid is natural gas.

## Amended claims

### Amended claims in accordance with Rule 137(2) EPC.

**1.** A fluid meter (10) comprising:
a meter casing comprising a sensor barrel (32) projecting into the casing and defining a sensor socket;
a fluid flow path provided within the meter casing;
a fluid engagement member provided in the fluid flow path and adapted to be driven by a fluid flow;
a magnetic field sensor (12) provided within the sensor socket, on the outside of the meter casing;
a plurality of magnets (14, 16) including at least one north-pole and one south-pole mounted for rotational movement within the meter casing about the sensor barrel; and
drive transfer means(18) coupled between the fluid engagement member and the magnets, such that fluid flow is converted into rotation of the magnets about the sensor, such that the sensor detects corresponding changes in the sense of the magnetic field to which it is exposed,
**characterized in that** the axis of rotation of the magnets is generally co-axial with the longitudinal axis of the sensor barrel and the magnetic field sensor is located adjacent to the wall of the sensor barrel.

**2.** A fluid meter as claimed in claim 1, wherein the magnetic field sensor comprises a Hall effect sensor (12).

**3.** A fluid meter as claimed in claim 2, wherein the output signal of the Hall effect sensor is coupled to an electronic index means.

**4.** A fluid meter as claimed in any preceding claim, wherein the fluid meter comprises four permanent magnets general equally spaced about a common axis of rotation.

**5.** A fluid meter as claimed in claim 4, wherein the magnets are provided on a mounting drum (24) arranged in a north-pole, south-pole, north-pole, south-pole configuration around the drum, the drum being mounted for rotation around the sensor barrel.

**6.** A fluid meter as claimed in claim 5, wherein the drive transfer means comprises a drive shaft (22), coupled at one end to the mounting drum (24).

**7.** A fluid meter as claimed in any preceding claim, wherein the fluid engagement member comprises a diaphragm, an impeller or a turbine.

**8.** A fluid meter as claimed in any preceding claim, wherein a plurality of fluid flow paths are provided, with a corresponding plurality of fluid engagement members located therein.

**9.** A fluid meter as claimed in claims 7 or 8, wherein where the or each fluid engagement member comprises a diaphragm, the drive transfer means further comprises drive conversion means coupled to the diaphragm and adapted to convert reciprocating linear movement of the diaphragm into rotational movement.

**10.** A fluid meter as claimed in any preceding claim, wherein the fluid is natural gas.
